# EUROPEAN PATENT APPLICATION

(11) **EP 4 563 637 A1**
(43) Date of publication of application: **04.06.2025**
(21) Application number: 24214332.9
(22) Date of filing: 20.11.2024
(51) Int. Cl.: C08K 9/08, C08K 9/06, C08K 5/00, C08K 7/14, C08L 67/02, C08K 5/49

(54) **FLAME-RETARDANT POLYESTER RESIN COMPOSITE COMPOSITION AND ARTICLE MOLDED THEREFROM**

(30) Priority: 30.11.2023 KR 20230170352; 15.07.2024 KR 20240092761
(71) Applicant: Hanwha TotalEnergies Petrochemical Co., Ltd., Seosan-si, Chungcheongnam-do 31900 (KR)
(72) Inventor: KIM, Taeyoung, 31900 Chungcheongnam-do (KR); HWANG, Yong Ki, 31900 Chungcheongnam-do (KR); CHUN, YongSung, 31900 Chungcheongnam-do (KR)
(74) Representative: HGF

(57) **Abstract**

The present invention relates to a flame-retardant polyester resin composite composition with balanced mechanical properties and excellent hydrolysis resistance and to a molded article molded therefrom. The flame-retardant polyester resin composite composition according to an embodiment of the present invention has balanced mechanical properties and excellent hydrolysis resistance. Thus, a flame-retardant polyester resin composite article prepared therefrom can be advantageously used as an automobile part or an electrical or electronic part.

## Description

### Technical Field

The present invention relates to a flame-retardant polyester resin composite composition and to an article molded therefrom. Specifically, the present invention relates to a flame-retardant polyester resin composite composition with balanced mechanical properties and excellent hydrolysis resistance and to a molded article molded therefrom.

### Background Art of the Invention

Polyester is a synthetic resin that is excellent in mechanical strength, thermal resistance, transparency, and gas barrier properties. It is widely used as a material for beverage-filling containers, packaging films, audio and video films, and the like. In addition, polyester is also widely used as a material in medical textiles, tire cords, and construction materials.

To enhance the mechanical or thermal properties of a polyester resin, a filler such as a glass fiber is often used (see Korean Laid-open Patent Publication No. 10-2022-0168438). Although a polyester resin composition reinforced with a glass fiber has enhanced mechanical properties and thermal resistance, it also has the problem that its color would be easily changed at high temperatures.

In addition, there have been attempts to add a flame retardant to a polyester resin to enhance flame retardancy and adhesive strength with other members (see Japanese Laid-open Patent Publication No. 2023-081366).

Meanwhile, since polyester resins are prone to hydrolysis in high-temperature and humid environments, there application range is limited.

Accordingly, there is a need for the development of a flame-retardant polyester resin composite composition with balanced mechanical properties and excellent hydrolysis resistance.

### Prior Art Documents

### Patent Documents

Patent Document 1: Korean Laid-open Patent Publication No. 10-2022-0168438
Patent Document 2: Japanese Laid-open Patent Publication No. 2023-081366

### Disclosure of the Invention

### Technical Problem to Solve

An object of the present invention is to provide a flame-retardant polyester resin composite composition with balanced mechanical properties and excellent hydrolysis resistance.

Another object of the present invention is to provide an article molded from the flame-retardant polyester resin composite composition.

### Solution to the Problem

According to an embodiment of the present invention to accomplish the above object, there is provided a flame-retardant polyester resin composite composition that comprises (A) 40 to 60% by weight of a polyester resin; (B) 10 to 50% by weight of a glass fiber surface-treated with a sizing composition comprising a film former comprising a polyurethane resin and an epoxy resin and a silane coupling agent comprising amino silane and epoxy silane; and (C) 10 to 30% by weight of a flame retardant with a content of phosphorus of 20% by weight or more and a content of nitrogen of 5% by weight or less, wherein the polyester resin has an intrinsic viscosity of 0.8 to 1.1 dl/g when measured in a 3:2 (by weight) mixed solvent of phenol and o-dichlorobenzene at 25°C, or the polyester resin has a melt index of 10 to 80 g/10 minute when measured at 250°C under a load of 2.16 kg according to ASTM D1238.

In a specific embodiment of the present invention, the content of the polyester resin (A) may be 45 to 55% by weight, the content of the surface-treated glass fiber (B) may be 20 to 35% by weight, and the content of the flame retardant (C) may be 15 to 25% by weight.

In a specific embodiment of the present invention, the polyester resin (A) may comprise at least one selected from the group consisting of a polybutylene terephthalate (PBT) and a polyethylene terephthalate (PET).

In a specific embodiment of the present invention, the flame-retardant polyester resin composite composition may further comprise at least one additive (D) selected from the group consisting of an antioxidant, a weathering stabilizer, a mold release agent, a dispersant, a neutralizer, an anti-blocking agent, a reinforcement, a filler, an antistatic agent, a lubricant, a slip agent, a nucleating agent, an additional flame retardant, a pigment, and a dye.

In a specific embodiment of the present invention, the flame-retardant polyester resin composite composition may further comprise at least one antioxidant selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite in an amount of 0.05 to 0.3 part by weight relative to 100 parts by weight of components A, B, and C.

In a specific embodiment of the present invention, the flame-retardant polyester resin composite composition may further comprise at least one lubricant selected from the group consisting of pentaerythritol tetrastearate and N,N'-ethylenedistearamide in an amount of 0.1 to 0.5 part by weight relative to 100 parts by weight of components A, B, and C.

According to another embodiment of the present invention, there is provided a flame-retardant polyester resin composite article molded from the flame-retardant polyester resin composite composition.

In a specific embodiment of the present invention, the flame-retardant polyester resin composite article based on a thickness of 0.75 mm may satisfy the V0 standard when measured in accordance with the UL94 method.

In a specific embodiment of the present invention, when an ISO standard specimen of the flame-retardant polyester resin composite article is stored for 1,000 hours at a temperature of 85°C and a relative humidity of 85%, the tensile strength may be 85% or more of the initial tensile strength.

In a specific embodiment of the present invention, the flame-retardant polyester resin composite article may be an automobile part or an electrical or electronic part.

### Advantageous Effects of the Invention

The flame-retardant polyester resin composite composition according to an embodiment of the present invention has balanced mechanical properties and excellent hydrolysis resistance.

The flame-retardant polyester resin composite article according to an embodiment of the present disclosure can be advantageously used as an automobile part or an electrical or electronic part.

### Detailed Description for Carrying out the Invention

Hereinafter, the present invention will be described in more detail.

The flame-retardant polyester resin composite composition according to an embodiment of the present invention comprises (A) 40 to 60% by weight of a polyester resin; (B) 10 to 50% by weight of a glass fiber surface-treated with a sizing composition comprising a film former comprising a polyurethane resin and an epoxy resin and a silane coupling agent comprising amino silane and epoxy silane; and (C) 10 to 30% by weight of a flame retardant with a content of phosphorus of 20% by weight or more and a content of nitrogen of 5% by weight or less.

### (A) Polyester resin

The flame-retardant polyester resin composite composition according to an embodiment comprises a polyester resin (A).

In a specific embodiment of the present invention, the polyester resin (A) may comprise at least one selected from the group consisting of a polybutylene terephthalate (PBT) and a polyethylene terephthalate (PET). That is, the polyester resin (A) may comprise any one, or both, of a polybutylene terephthalate (PBT) and a polyethylene terephthalate (PET).

Here, the polybutylene terephthalate (PBT) may be prepared by subjecting 1,4-butanediol and terephthalic acid or dimethyl terephthalate to an esterification or transesterification reaction and then subjecting the product to a polycondensation reaction. The polyethylene terephthalate (PET) may be prepared by subjecting ethylene glycol and terephthalic acid or dimethyl terephthalate to an esterification or transesterification reaction and then subjecting the product to a polycondensation reaction.

In addition, the polyester resin (A) has an intrinsic viscosity of 0.8 to 1.1 dl/g when measured in a 3:2 (by weight) mixed solvent of phenol and o-dichlorobenzene at 25°C, or the polyester resin has a melt index of 10 to 80 g/10 minute when measured at 250°C under a load of 2.16 kg according to ASTM D1238. When the intrinsic viscosity or melt index of the polyester resin (A) is within the above range, the flame-retardant polyester resin composite composition can exhibit excellent mechanical properties while having appropriate processability.

The flame-retardant polyester resin composite composition according to an embodiment comprises the polyester resin (A) in an amount of 40 to 60% by weight based on the total weight of the composition. Preferably, the flame-retardant polyester resin composite composition may comprise the polyester resin (A) in an amount of 45 to 55% by weight based on the total weight of the composition. If the content of the polyester resin (A) is less than 40% by weight, the mechanical properties and processability of a molded article may be deteriorated. If it exceeds 60% by weight, the processability and impact strength of a molded article may be deteriorated.

### (B) Surface-treated glass fiber

The flame-retardant polyester resin composite composition according to an embodiment comprises a glass fiber surface-treated with a sizing composition (B). Specifically, the flame-retardant polyester resin composite composition according to an embodiment of the present invention comprises a glass fiber surface-treated with a sizing composition comprising a film former comprising a polyurethane resin and an epoxy resin and a silane coupling agent comprising amino silane and epoxy silane (B). The glass fiber surface-treated with a sizing composition (B) may serve to enhance the mechanical strength and hydrolysis resistance of the flame-retardant polyester resin composite composition.

The glass fiber surface-treated with a sizing composition (B) employed in the flame-retardant polyester resin composite composition according to an embodiment of the present invention may be one disclosed in Korean Laid-open Patent Publication No. 10-2022-0168438, but it is not particularly limited thereto.

The flame-retardant polyester resin composite composition according to an embodiment comprises the glass fiber surface-treated with a sizing composition (B) in an amount of 10 to 50% by weight based on the total weight of the composition. Preferably, the flame-retardant polyester resin composite composition may comprise the glass fiber surface-treated with a sizing composition (B) in an amount of 10 to 40% by weight, more preferably, 20 to 35% by weight, based on the total weight of the composition. When the content of the glass fiber surface-treated with a sizing composition (B) satisfies the above range, the flame-retardant polyester resin composite composition can have excellent mechanical strength and hydrolysis resistance.

### (C) Flame retardant

The flame-retardant polyester resin composite composition according to an embodiment comprises a flame retardant (C). Specifically, the flame retardant (C) is a phosphorus-based flame retardant or a phosphorus-nitrogen-based flame retardant with a content of phosphorus of 20% by weight or more and a content of nitrogen of 5% by weight or less.

In a specific embodiment of the present invention, the flame retardant (C) may comprise at least one phosphorus-based flame retardant or a phosphorus-nitrogen-based flame retardant selected from flame retardants in which a polyphosphate-based flame retardant and a melamine-based flame retardant are combined.

The flame-retardant polyester resin composite composition according to an embodiment comprises the flame retardant (C) in an amount of 10 to 30% by weight based on the total weight of the composition. Preferably, the flame-retardant polyester resin composite composition may comprise the flame retardant (C) in an amount of 15 to 25% by weight based on the total weight of the composition. When the content of the flame retardant (C) satisfies the above range, the flame-retardant polyester resin composite composition can have excellent flame retardancy, along with excellent mechanical strength and hydrolysis resistance.

### (D) Additive

The flame-retardant polyester resin composite composition according to an embodiment of the present invention may further comprise conventional additives within a range that does not depart from the scope of the present invention. For example, the flame-retardant polyester resin composite composition according to an embodiment of the present invention may further comprise at least one additive (D) selected from the group consisting of an antioxidant, a weathering stabilizer, a mold release agent, a dispersant, a neutralizer, an anti-blocking agent, a reinforcement, a filler, an antistatic agent, a lubricant, a slip agent, a nucleating agent, an additional flame retardant, a pigment, and a dye, but it is not particularly limited thereto.

In a specific embodiment of the present invention, the flame-retardant polyester resin composite composition may further comprise an antioxidant to enhance the thermal stability thereof. The antioxidant may be a phenolic antioxidant, a phosphorous antioxidant, or the like. Specifically, it may comprise at least one antioxidant selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite.

Here, the flame-retardant polyester resin composite composition may further comprise the antioxidant in an amount of 0.05 to 0.3 part by weight relative to 100 parts by weight of components A, B, and C. If the content of the antioxidant is less than 0.05 part by weight, it is difficult to secure long-term thermal stability. Meanwhile, if the content of the antioxidant exceeds 0.3 part by weight, the thermal stability would not be further improved, while the economic efficiency of the product may be reduced, which is not preferable.

In a specific embodiment of the present invention, the flame-retardant polyester resin composite composition may further comprise a lubricant. Specifically, the flame-retardant polyester resin composite composition may further comprise at least one lubricant selected from the group consisting of pentaerythritol tetrastearate and N,N'-ethylenedistearamide in an amount of 0.1 to 0.5 part by weight relative to 100 parts by weight of components A, B, and C.

Meanwhile, there is no particular limitation to the method of preparing the flame-retardant polyester resin composite composition according to an embodiment of the present invention. Any method of preparing a polyester resin composition known in the art to which the present invention pertains may be used as it is or as appropriately modified. The respective resin components and compounds described above may be selected and mixed according to a desired order without any particular limitations thereto.

As a specific example, the respective resins and compounds described above in predetermined amounts are blended for 1 to 2 hours in a blender such as a Henschel mixer, a kneader, a roll, and a Banbury mixer. They are then melted and compounded in a single- or twin-screw extruder at a temperature of 200 to 270°C, thereby preparing a polyester resin composition in the form of pellets.

According to another embodiment of the present invention, there is provided a flame-retardant polyester resin composite article molded from the flame-retardant polyester resin composite composition.

There is no particular limitation to the method of preparing a molded article from the flame-retardant polyester resin composite composition according to an embodiment of the present invention. Any method known in the technical field of the present invention may be used. For example, the flame-retardant polyester resin composite composition according to an embodiment of the present invention may be molded by a conventional method such as injection molding, extrusion molding, casting molding, or the like to prepare a flame-retardant polyester resin composite article. Preferably, the flame-retardant polyester resin composite composition may be injection molded to prepare a molded article.

In a specific embodiment of the present invention, the flame-retardant polyester resin composite article based on a thickness of 0.75 mm may satisfy the V0 standard when measured in accordance with the UL94 method.

In a specific embodiment of the present invention, when an ISO standard specimen of the flame-retardant polyester resin composite article is stored for 1,000 hours at a temperature of 85°C and a relative humidity of 85%, the tensile strength may be 85% or more of the initial tensile strength.

In a specific embodiment of the present invention, the flame-retardant polyester resin composite article may be used as an automobile part or an electrical or electronic part.

### Example

Hereinafter, the present invention is explained in detail by the following examples. However, the following examples are intended to further illustrate the present invention. The scope of the present invention is not limited thereto only.

### Example 1 and Comparative Examples 1 to 6

The following resins and compounds were used in the amounts shown in Table 1.

A polyester resin was added with a glass fiber surface-treated with a sizing composition, a phosphorus-based flame retardant, and additives, which is melted and mixed in an extruder using a twin-screw extruder (75 mm, LID 1:44), and the continuous resin composite was pelletized to prepare resin composition pellets. Subsequently, the resin composition pellets were dried in a dryer at 120°C for 4 hours, and injection-molded specimens for testing were prepared using an Ankel 180-ton injection molding machine.

Here, pentaerythritol tetrakis(3-(3,5-di-t-butyl-4-hydroxyphenyl)propionate) and 1,3,5-trimethyl-2,4,6-tris(3,5-di-t-butyl-4-hydroxybenzyl)benzene as an antioxidant and ethylene bis-stearamide as a lubricant were used.
- A1: Polybutylene terephthalate (Kanghui, KH2100; intrinsic viscosity 1.0 dl/g)
- A2: Polyethylene terephthalate (Lotte Chemical, BCN-80; intrinsic viscosity 0.85 dl/g)
- B1: Glass fiber surface-treated with a sizing composition (KCC, CS329)
- B2: Glass fiber (KCC, CS321)
- C1: Phosphorus-based flame retardant (phosphorus content 23% by weight, nitrogen content 0% by weight)
- C2: Phosphorus-nitrogen-based flame retardant (phosphorus content 21% by weight, nitrogen content 15% by weight)
- C3: Phosphorus-nitrogen-based flame retardant (phosphorus content 19% by weight, nitrogen content 10% by weight)
- C4: Phosphorus-zinc-based flame retardant (phosphorus content 19% by weight, nitrogen content 0% by weight)
- C5: Phosphorus nitrogen-based flame retardant (phosphorus content 23% by weight, nitrogen content 5% by weight)
- C6: Aromatic brominated flame retardant (bromine content 50% by weight) and antimony trioxide (antimony trioxide content 90% by weight)
- D1: Hydrolysis inhibitor (carbodiimide)
- D2: Hydrolysis inhibitor (ethylene-glycidyl methacrylate)

**[Table 1]**

| | Ex. 1 | Ex. 2 | C. Ex. 1 | C. Ex. 2 | C. Ex. 3 | C. Ex. 4 | C. Ex. 5 | C. Ex. 6 |
|---|---|---|---|---|---|---|---|---|
| A1 | 50 | 40 | 50 | 50 | 50 | 35 | 47 | 47 |
| A2 | | 10 | | | | 15 | | |
| B1 | 30 | 30 | 30 | 30 | | | | |
| B2 | | | | | 30 | 30 | 30 | 30 |
| C1 | 20 | | | | | | 20 | 20 |
| C2 | | | | 20 | | | | |
| C3 | | | | | 20 | | | |
| C4 | | | | | | 20 | | |
| C5 | | 20 | | | | | | |
| C6 | | | 20 | | | | | |
| D1 | | | | | | | 3 | |
| D2 | | | | | | | | 3 |
| Total (%) | 100 | 100 | 100 | 100 | 100 | 100 | 100 | 100 |

### Test Example

The flame-retardant polyester resin composite compositions and the specimens prepared therefrom in the Examples and Comparative Examples were each tested by the following methods.

### (1) Density

It was measured in accordance with ISO 1183.

### (2) Tensile strength

It was measured in accordance with ISO 527. Each specimen was prepared according to TYPE A, and the test speed was 50 mm/minute.

### (3) Flexural modulus and flexural strength

It was measured in accordance with ISO 178. Each specimen had a size of 80 mm × 10 mm × 4.0 mm, the span length was 60 mm, and the test speed was 2 mm/minute.

### (4) Izod impact strength

It was measured at room temperature in accordance with ISO 180, TYPE A. Each specimen had a size of 80 mm × 10 mm × 4.0 mm, and a notched specimen was used.

### (5) Heat distortion temperature (HDT)

It was measured in accordance with ISO 75. Each specimen had a size of 80 mm × 10 mm × 4.0 mm, and the stress load was 0.45 MPa.

### (6) Hydrolysis resistance

The change in tensile strength was measured after it was maintained for 1,000 hours at a temperature of 85°C and a relative humidity of 85%.

### (7) Flame retardancy

It was measured using the UL94 method.

**[Table 2]**

| | Unit | Ex. 1 | Ex. 2 | C. Ex. 1 | C. Ex. 2 | C. Ex. 3 | C. Ex. 4 | C. Ex. 5 | C. Ex. 6 |
|---|---|---|---|---|---|---|---|---|---|
| Density | g/cm3 | 1.531 | 1.552 | 1.543 | 1.548 | 1.553 | 1.552 | 1.554 | 1.558 |
| Tensile strength | MPa | 99 | 96 | 89 | 97 | 103 | 103 | 94 | 94 |
| Flexural strength | MPa | 157 | 151 | 152 | 149 | 162 | 162 | 150 | 158 |
| Flexural modulus | MPa | 9,812 | 10,035 | 9,754 | 10,055 | 9,686 | 7,860 | 7,803 | 7,625 |
| Izod (room temp.) | kJ/m² | 6.2 | 6.3 | 5.3 | 6.2 | 6.3 | 7.6 | 5.9 | 7.4 |
| HDT | °C | 198 | 200 | 184 | 200 | 202 | 180 | 193 | 196 |
| Hydrolysis resistance | % | 91 | 90 | 82 | 79 | 61 | 48 | 90 | 93 |
| Flame retardancy (0.75 t) | | V0 | V0 | V1 | V2 | V0 | V2 | V1 | V1 |
| Flame retardancy (1.5 t) | | V0 | V0 | V0 | V0 | V0 | V2 | V0 | V0 |
| Flame retardancy (3.0 t) | | V0 | V0 | V0 | V0 | V0 | NG | V0 | V0 |

As can be seen from Tables 1 and 2 above, the molded articles prepared from the flame-retardant polyester resin composite compositions of the Examples, falling within the scope of the present invention, were all excellent in mechanical properties, hydrolysis resistance, and flame retardancy.

In contrast, in Comparative Example 1, in which an aromatic brominated flame retardant and antimony trioxide were used, the flame retardancy was deteriorated. In Comparative Example 2, in which a flame retardant with a nitrogen content outside the range of the present invention was used, the flame retardancy and hydrolysis resistance were deteriorated. In Comparative Example 3, in which a flame retardant with a nitrogen content outside the range of the present invention and a glass fiber whose surface had not been treated were used, the hydrolysis resistance was deteriorated. In Comparative Example 4, in which a phosphorous-zinc-based flame retardant and a glass fiber whose surface had not been treated were used, the flexural modulus, hydrolysis resistance, and flame retardancy were significantly deteriorated. In Comparative Examples 5 and 6, in which a glass fiber whose surface had not been treated and a hydrolysis inhibitor were used, the flexural modulus and flame retardancy were decreased.

Molded articles prepared from the flame-retardant polyester resin composite compositions according to the Examples, falling within the scope of the present invention, have balanced mechanical properties and excellent hydrolysis resistance. Thus, they can be advantageously used as automobile parts and electrical or electronic parts.

## Claims

1. A flame-retardant polyester resin composite composition, which comprises (A) 40 to 60% by weight of a polyester resin; (B) 10 to 50% by weight of a glass fiber surface-treated with a sizing composition comprising a film former comprising a polyurethane resin and an epoxy resin and a silane coupling agent comprising amino silane and epoxy silane; and (C) 10 to 30% by weight of a flame retardant with a content of phosphorus of 20% by weight or more and a content of nitrogen of 5% by weight or less, wherein the polyester resin has an intrinsic viscosity of 0.8 to 1.1 dl/g when measured in a 3:2 (by weight) mixed solvent of phenol and o-dichlorobenzene at 25°C, or the polyester resin has a melt index of 10 to 80 g/10 minute when measured at 250°C under a load of 2.16 kg according to ASTM D1238.

2. The flame-retardant polyester resin composite composition of claim 1, wherein the content of the polyester resin (A) is 45 to 55% by weight, the content of the surface-treated glass fiber (B) is 20 to 35% by weight, and the content of the flame retardant (C) is 15 to 25% by weight.

3. The flame-retardant polyester resin composite composition of claim 1 or 2, wherein the polyester resin (A) comprises at least one selected from the group consisting of a polybutylene terephthalate (PBT) and a polyethylene terephthalate (PET).

4. The flame-retardant polyester resin composite composition of any one of claims 1 to 3, which further comprises at least one additive (D) selected from the group consisting of an antioxidant, a weathering stabilizer, a mold release agent, a dispersant, a neutralizer, an anti-blocking agent, a reinforcement, a filler, an antistatic agent, a lubricant, a slip agent, a nucleating agent, an additional flame retardant, a pigment, and a dye.

5. The flame-retardant polyester resin composite composition of claim 4, wherein the antioxidant comprises at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite in an amount of 0.05 to 0.3 part by weight relative to 100 parts by weight of components A, B, and C.

6. The flame-retardant polyester resin composite composition of claim 4, wherein the lubricant comprises at least one selected from the group consisting of pentaerythritol tetrastearate and N,N'-ethylenedistearamide in an amount of 0.1 to 0.5 part by weight relative to 100 parts by weight of components A, B, and C.

7. A flame-retardant polyester resin composite article molded from the flame-retardant polyester resin composite composition according to any one of claims 1 to 6.

8. The flame-retardant polyester resin composite article of claim 7, which, based on a thickness of 0.75 mm, satisfies the V0 standard when measured in accordance with the UL94 method.

9. The flame-retardant polyester resin composite article of claim 7 or 8, wherein, when an ISO standard specimen of the flame-retardant polyester resin composite article is stored for 1,000 hours at a temperature of 85°C and a relative humidity of 85%, the tensile strength is 85% or more of the initial tensile strength.

10. The flame-retardant polyester resin composite article of any one of claims 7 to 9, which is an automobile part or an electrical or electronic part.
